(19)

Europäisches Patentamt
European Patent Office
Office européen des brevets

(11) **EP 4 768 701 A1**

(12) **EUROPEAN PATENT APPLICATION**
published in accordance with Art. 153(4) EPC

(43) Date of publication:
  **01.07.2026  Bulletin 2026/27**

(21) Application number: **24879793.8**

(22) Date of filing: **17.10.2024**

(51) International Patent Classification (IPC):
  *F02B 37/10* (2006.01)   *F02B 39/10* (2006.01)
  *F02B 39/14* (2006.01)   *H01M 8/04* (2016.01)
  *H01M 8/04111* (2016.01)   *H01M 8/04313* (2016.01)
  *H02P 29/024* (2016.01)

(52) Cooperative Patent Classification (CPC):
  **F02B 37/10; F02B 39/10; F02B 39/14; H01M 8/04;
  H01M 8/04111; H01M 8/04313; H02P 29/024**

(86) International application number:
  **PCT/JP2024/037063**

(87) International publication number:
  **WO 2025/084372 (24.04.2025 Gazette 2025/17)**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority: **20.10.2023  JP 2023180732**

(71) Applicant: **IHI Corporation
  Koto-ku
  Tokyo 135-8710 (JP)**

(72) Inventors:
  • **IKEYA, Nobuyuki
    Tokyo 135-8710 (JP)**
  • **II, Kenji
    Tokyo 135-8710 (JP)**
  • **SUZUKI, Junichi
    Tokyo 135-8710 (JP)**
  • **DIETMAR, Filsinger
    69168 Wiesloch (DE)**

(74) Representative: **TBK
  Bavariaring 4-6
  80336 München (DE)**

(54) **ELECTRIC MOTOR SYSTEM, LIFE EVALUATION DEVICE, LIFE EVALUATION METHOD, AND LIFE EVALUATION PROGRAM**

(57)   An electric motor system includes a motor, a hydrodynamic air bearing that rotatably supports a shaft of the motor, a power conversion circuit that provides a drive current to the motor, and a controller including a life evaluation module that evaluates a life of the air bearing. The life evaluation module has a data input unit that obtains rotation speed history data which is a time history of a rotation speed of the motor, a sliding distance acquisition unit that obtains, using the rotation speed history data, a sliding distance when the shaft is in a state of rotating while being in contact with the air bearing, and an evaluation value calculation unit that evaluates the life of the air bearing using the sliding distance.

*Fig.6*

## Description

### Technical Field

The present disclosure relates to an electric motor system, a life evaluation device, a life evaluation method, and a life evaluation program.

### Background Art

Patent Literature 1 discloses a technology handling data regarding the life of a turbocharger. The technology of Patent Literature 1 obtains a value obtained by integrating an operation time of an exhaust turbocharger within a resonance rotation speed region based on a turbine rotation speed of the exhaust turbocharger provided in an internal combustion engine. Patent Literature 2 discloses a technology for detecting an abnormality of an electric turbocharger. The technology of Patent Literature 2 focuses on a difference between a rated rotation speed and an actual rotation speed of an electric motor. The technology of Patent Literature 2 determines whether or not an operation state of the electric motor is abnormal based on the difference between the rated rotation speed and the actual rotation speed.

### Citation List

### Patent Literature

Patent Literature 1: Japanese Unexamined Patent Application Publication No. 2012-12995
Patent Literature 2: Japanese Unexamined Patent Application Publication No. 2013-72301

### Summary of Invention

### Technical Problem

In a system including an electric motor, deterioration of components occurs due to operation. If a deteriorated component is present, the system falls into a state where it cannot exhibit desired performance. If the deterioration of the component further progresses, the system may fall into a situation where it cannot be operated. Therefore, if the life of the component can be predicted, it becomes possible to perform maintenance work for replacing the component in advance.

The present disclosure describes an electric motor system, a life evaluation device, a life evaluation method, and a life evaluation program that are capable of evaluating the life of a system including an electric motor.

### Solution to Problem

An electric motor system according to one aspect of the present disclosure includes a motor, a hydrodynamic air bearing that rotatably supports a shaft of the motor, a power conversion unit that provides a drive current to the motor, and a life evaluation unit that evaluates a life of the air bearing. The life evaluation unit includes a data input unit that obtains rotation speed history data which is a time history of a rotation speed of the motor, a sliding distance acquisition unit that obtains, using the rotation speed history data, a sliding distance when the shaft is in a state of rotating while being in contact with the air bearing, and an evaluation value calculation unit that obtains a remaining life evaluation value for evaluating the life of the air bearing using the sliding distance.

### Effects of Invention

According to the electric motor system, the life evaluation device, the life evaluation method, and the life evaluation program of the present disclosure, it is possible to evaluate the life of a system including an electric motor.

### Brief Description of Drawings

Fig. 1 is a schematic diagram showing an electric motor system of an embodiment.

Fig. 2 is a diagram for explaining a life evaluation function of a controller.

Fig. 3(a) is an illustration of rotation speed history data. Fig. 3(b) is an illustration of a change over time in a remaining foil thickness.

Fig. 4 is a flowchart showing main steps of a life evaluation method.

Fig. 5 is a diagram for explaining main parameters in the life evaluation method.

Fig. 6 is a diagram for explaining functional components of the controller of the embodiment.

Fig. 7 is an illustration of a physical configuration of the controller.

Fig. 8 is a schematic diagram showing an electric motor system of a modification.

Fig. 9 is a schematic diagram showing an electric motor system of still another modification.

**Description of Embodiments**

An electric motor system according to one aspect of the present disclosure includes a motor, a hydrodynamic air bearing that rotatably supports a shaft of the motor, a power conversion unit that provides a drive current to the motor, and a life evaluation unit that evaluates a life of the air bearing. The life evaluation unit includes a data input unit that obtains rotation speed history data which is a time history of a rotation speed of the motor, a sliding distance acquisition unit that obtains, using the rotation speed history data, a sliding distance when the shaft is in a state of rotating while being in contact with the air bearing, and an evaluation value calculation unit that obtains a remaining life evaluation value for evaluating the life of the air bearing using the sliding distance.

The electric motor system calculates, in the life evaluation unit, the sliding distance when the shaft is in the state of rotating while being in contact with the air bearing. The life evaluation unit evaluates the life of the air bearing using the sliding distance. Therefore, the electric motor system can evaluate the life of the system including the electric motor attributable to the air bearing.

In the electric motor system according to one aspect, the air bearing may have a foil with a thin-plate shape and may rotatably support the shaft along a radial direction of the shaft by a gas film formed between the shaft in rotation and the foil. The evaluation value calculation unit may include a remaining foil thickness acquisition unit that obtains a remaining foil thickness of the foil after wearing based on a wear amount of the foil caused by rotation of the shaft while being in contact with the air bearing as the rotation speed of the shaft decreases. According to this configuration, it is possible to evaluate the life of the air bearing supporting the shaft in the radial direction using the thickness of the foil.

In the electric motor system according to one aspect, the air bearing may have a foil with a thin-plate shape and may rotatably support the shaft along an axial direction of the shaft by a gas film formed between a thrust collar provided on the shaft in rotation and the foil. The evaluation value calculation unit may include a remaining foil thickness acquisition unit that obtains a remaining foil thickness of the foil after wearing based on a foil wear amount of the foil caused by rotation of the shaft while being in contact with the air bearing as the rotation speed of the shaft decreases. According to this configuration, it is possible to evaluate the life of the air bearing supporting the shaft in the thrust direction using the thickness of the foil.

In the electric motor system according to one aspect, the evaluation value calculation unit may include a wear amount conversion coefficient acquisition unit that obtains a wear amount conversion coefficient for converting the sliding distance into the wear amount of the foil when the wear amount of the foil is defined as a function having the sliding distance as a variable. According to this configuration, the foil wear amount can be obtained from the sliding distance.

In the electric motor system according to one aspect, the wear amount conversion coefficient acquisition unit may obtain the wear amount conversion coefficient based on at least one of a required stop time required to reach a state where rotation of the shaft is stopped from a predetermined rotation state after transitioning from a state where the drive current is provided from the power conversion unit to the motor to a state where the drive current is stopped, and a contact rotation speed which is a rotation speed at which the shaft whose rotation speed decreases starts to contact the foil in the state where the drive current is stopped. According to this configuration, it is possible to reflect an operation status in the calculation of the wear amount of the foil.

In the electric motor system according to one aspect, the life evaluation unit may have a friction torque acquisition unit that obtains a friction torque between the air bearing and the shaft using the rotation speed history data, and a contact rotation speed acquisition unit that obtains the contact rotation speed using the friction torque. According to this configuration, it is possible to easily obtain the contact rotation speed for obtaining the sliding distance.

A life evaluation device according to another aspect of the present disclosure is applied to a motor system including a motor, a hydrodynamic air bearing that rotatably supports a shaft of the motor, and a power conversion unit that provides a drive current to the motor, and evaluates a life of the motor system. The life evaluation device includes a data input unit that obtains rotation speed history data which is a time history of a rotation speed of the motor, a sliding distance acquisition unit that obtains, using the rotation speed history data, a sliding distance when the shaft is in a state of rotating while being in contact with the air bearing, and an evaluation value calculation unit that obtains a remaining life evaluation value for evaluating the life of the air bearing using the sliding distance.

A life evaluation method according to another aspect of the present disclosure evaluates a life of a motor system including a motor, a hydrodynamic air bearing that rotatably supports a shaft of the motor, and a power conversion unit that provides a drive current to the motor. The life evaluation method includes a step of obtaining rotation speed history data which is a time history of a rotation speed of the motor, a step of obtaining, using the rotation speed history data, a sliding distance when the shaft is in a state of rotating while being in contact with the air bearing, and a step of obtaining a remaining life evaluation value for evaluating the life of the air bearing using the sliding distance.

A life evaluation program according to another aspect of the present disclosure evaluates a life of a motor system including a motor, a hydrodynamic air bearing that rotatably supports a shaft of the motor, and a power conversion unit that provides a drive current to the motor. The life evaluation program causes a computer to operate as a data input unit that obtains rotation speed history data which is a time history of a rotation speed of the motor, a sliding distance acquisition unit that obtains, using the rotation speed history data, a sliding distance when the shaft is in a state of rotating while being in contact with the air bearing, and an evaluation value calculation unit that obtains a remaining life evaluation value for evaluating the life of the air bearing using the sliding distance.

Hereinafter, embodiments for carrying out the electric motor system, the life evaluation device, the life evaluation method, and the life evaluation program of the present disclosure will be described in detail with reference to the accompanying drawings. In the description of the drawings, the same elements are denoted by the same reference signs, and overlapping descriptions are omitted.

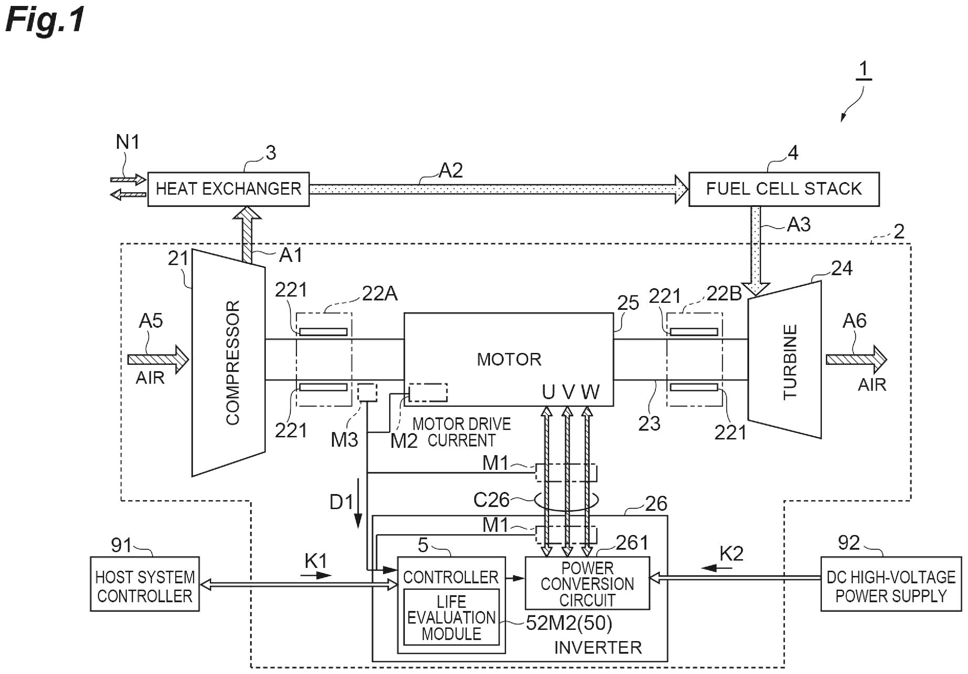

Fig. 1 shows a configuration of an electric motor system 1. The electric motor system 1 includes an electric turbocharger 2, a heat exchanger 3, and a fuel cell stack 4. The electric motor system 1 is mounted on, for example, a fuel cell vehicle. The electric turbocharger 2 outputs high-temperature and high-pressure air A1 to the heat exchanger 3. The heat exchanger 3 lowers a temperature of the air A1 to a predetermined temperature by a refrigerant N1. The heat exchanger 3 outputs air A2 whose temperature has been lowered to the fuel cell stack 4. The fuel cell stack 4 generates electric power by causing oxygen contained in the air A2 to react with separately supplied hydrogen. The fuel cell stack 4 outputs air A3 after reaction to the electric turbocharger 2. The electric turbocharger 2 uses the air A3 received from the fuel cell stack 4 as part of the driving force.

The electric motor system 1 of the present disclosure includes the fuel cell stack 4 as a component that receives the air A1 generated by the electric turbocharger 2. A supply destination of the air A1 generated by the electric turbocharger 2 is not limited to the fuel cell stack 4.

The electric turbocharger 2 outputs compressed air A1. The electric turbocharger 2 has a compressor 21 for compressing sucked air A5. By rotation of the compressor 21, the air A5 that has passed through a filter is sucked in, and the compressed air A1 is output. A first end of a shaft 23 is connected to the compressor 21. The shaft 23 rotates by receiving a driving force from a turbine 24 connected to a second end. The shaft 23 also receives a driving force from a motor 25 disposed between the compressor 21 and the turbine 24.

The motor 25 receives a drive current C26 from an inverter 26. The drive current C26 is a so-called three-phase current including a U-phase, a V-phase, and a W-phase. The inverter 26 converts a high-voltage direct current K2 received from a DC high-voltage power supply 92 into a three-phase current required by the motor 25. The inverter 26 can obtain phase information of the shaft 23 using the drive current C26. The phase information can be converted into information on a rotation speed. The inverter 26 controls the motor 25 using several internal variables. Examples of the internal variables are an output voltage of the DC high-voltage power supply 92, an output current of the DC high-voltage power supply 92, the drive current of the motor 25, a drive voltage of the motor 25, a rotation phase of the motor 25, and the rotation speed of the motor 25.

The inverter 26 communicates with a host system controller 91 of the electric turbocharger 2. For example, the inverter 26 receives an operation control signal K1 from the host system controller 91. A protocol for communication between the inverter 26 and the host system controller 91 may be a so-called CAN (Controller Area Network), or may be another protocol. The inverter 26 increases or decreases a motor output using a difference between a command value of the rotation speed from the host system controller 91 and an actual rotation speed of the shaft 23. As a result, the rotation speed of the shaft 23 is controlled so as to become the command value of the rotation speed from the host system controller 91. During the control, the voltage and current given from the DC high-voltage power supply 92 are measured. As a result, optimal driving of the motor 25 can be performed.

The inverter 26 includes a power conversion circuit 261 (power conversion unit) for converting electric power, and a controller 5 that controls an operation of the power conversion circuit 261. The power conversion circuit 261 is configured by a plurality of switching elements. The controller 5 converts the direct current K2 received from the DC high-voltage power supply 92 into the drive current C26 by controlling the ON/OFF status of the plurality of switching elements.

The shaft 23 is supported by two air bearings 22A and 22B. The air bearing 22A is disposed between the compressor 21 and the motor 25. The air bearing 22B is disposed between the motor 25 and the turbine 24. The positional relationship between the motor 25 and the air bearings 22A and 22B is not limited to the configuration and arrangement illustrated in the description of the present disclosure.

The air bearings 22A and 22B are so-called hydrodynamic air bearings that support the shaft 23 in rotation in a non-contact state. The air bearings 22A and 22B have a function of receiving a radial load along a radial direction of the shaft 23 as an example. The air bearings 22A and 22B are so-called foil bearings. The foil bearing has a foil 221 disposed so as to surround an outer peripheral surface of the shaft 23. An air film is formed between the outer peripheral surface of the rotating shaft 23 and a main surface of the foil 221. Since a slight gap is formed between the outer peripheral surface of the shaft 23 and the main surface of the foil 221 by the air film, the outer peripheral surface of the shaft 23 and the main surface of the foil 221 do not directly contact each other.

The air bearings 22A and 22B support the shaft 23 in a non-contact manner when the rotation speed of the shaft 23 is higher than a so-called contact rotation speed. Therefore, when the shaft 23 is in a stopped state where the shaft 23 is not rotating, the shaft 23 and the foil 221 are in contact. When the shaft 23 starts rotating from the contact state, the outer peripheral surface of the shaft 23 rotates while rubbing against the main surface of the foil 221. Then, when the rotation speed of the shaft 23 exceeds the contact rotation speed, the shaft 23 floats, so that a state of non-contact support is established. When the rotation speed of the shaft 23 falls below the contact rotation speed, the outer peripheral surface of the shaft 23 contacts the main surface of the foil 221 again. In the contact state, the rotation speed of the shaft 23 further decreases, and as a result, the rotation of the shaft 23 stops. Thus, the states of the air bearings 22A and 22B and the shaft 23 include a state of rotating while rubbing against each other and a state of rotating without contacting each other.

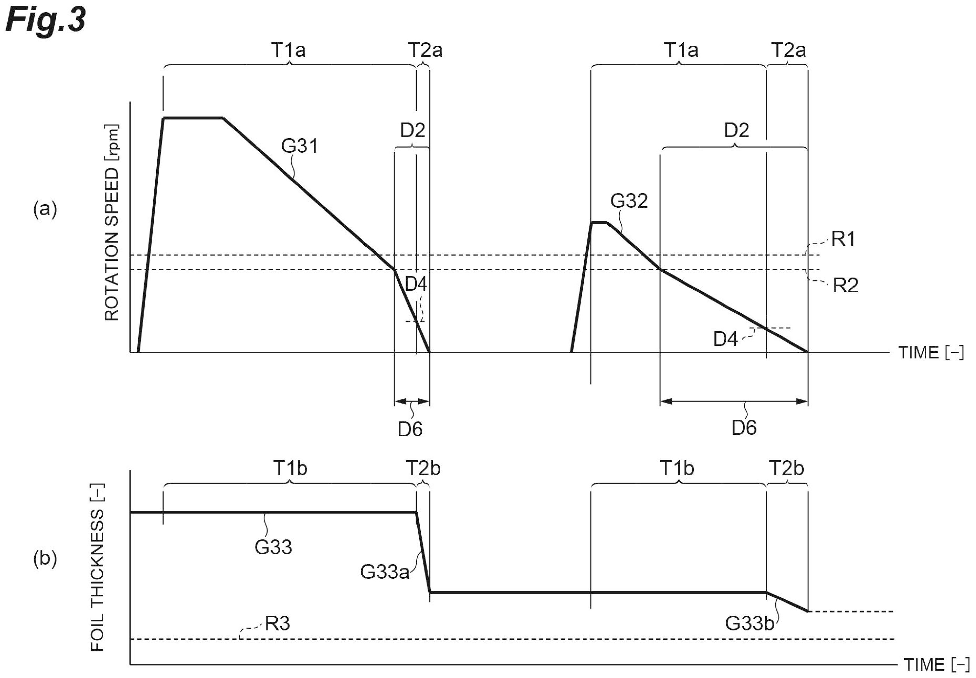

When the shaft 23 rotates while rubbing against the foils 221 of the air bearings 22A and 22B, wear of the foils 221 occurs. Since the foil 221 is a thin plate-shaped component, when a thickness of the foil 221 falls below a predetermined thickness (see reference sign R3 in Fig. 3(b)), the foil 221 is replaced. That is, the foil 221 is one of the elements that determine an operable period of the air bearings 22A and 22B. If a replacement timing of the foil 221 can be predicted in advance, it becomes possible to suitably operate the electric turbocharger 2 and the electric motor system 1 including the electric turbocharger 2. In the electric motor system 1 of the present disclosure, the timing at which the foil 221 should be replaced is defined as the life of the air bearings 22A and 22B, and the timing at which the foil 221 should be replaced is obtained. Since the air bearings 22A and 22B are components of the electric turbocharger 2, it can be said that the life of the air bearings 22A and 22B is the life of the electric turbocharger 2. Since the electric turbocharger 2 is a component of the electric motor system 1, it can be said that the life of the air bearings 22A and 22B is the life of the electric motor system 1.

Hereinafter, a schematic configuration for evaluating the life will be described.

The electric motor system 1 shown in Fig. 1 evaluates the life by the controller 5 provided in the inverter 26. The controller 5 evaluates the life of the air bearings 22A and 22B using rotation speed history data D1 of the shaft 23. The rotation speed history data D1 may be obtained using, for example, an output of a current sensor M1 that measures the drive current C26 provided from the inverter 26 to the motor 25. The current sensor M1 may be a component of the inverter 26. The current sensor M1 may be a component provided on a power line connecting the inverter 26 and the motor 25.

The rotation speed history data D1 may be obtained using outputs of other sensors. A motor sensor M2 is a component of the motor 25 and outputs data regarding a rotation speed of a rotor provided in the motor 25. The motor sensor M2 may utilize an induced current generated in a coil of a stator due to rotation of the rotor. The motor sensor M2 may directly measure the rotation of the rotor. A rotation speed sensor M3 is a component of the electric turbocharger 2 and may directly measure the rotation of the shaft 23.

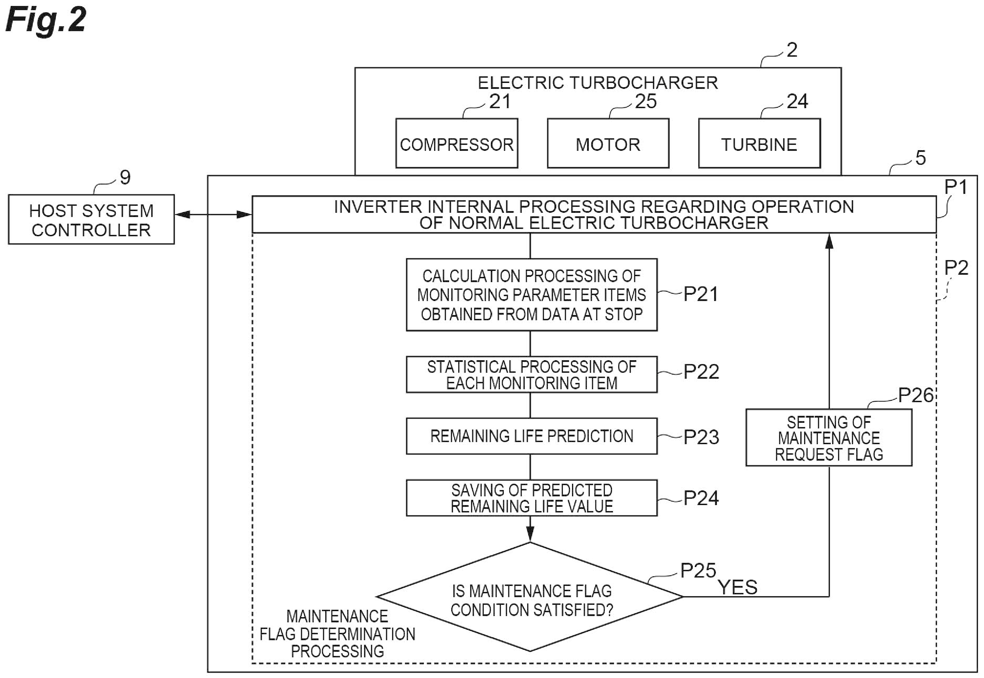

Fig. 2 schematically shows an operation of the controller 5. The controller 5 mainly performs two processes. A first process P1 is control of the inverter 26 regarding normal operation of the electric turbocharger 2. In the first process P1, a control signal for the switching elements provided in the power conversion circuit 261 is generated.

A second process P2 is a maintenance request flag determination. More specifically, in the second process P2, several monitoring parameters derived from the rotation speed history data D1 when the motor 25 is stopped are obtained by calculation (P21). Next, statistical processing of each monitoring parameter is performed (P22). Next, a remaining life is predicted (P23). For the prediction of the remaining life, coefficients obtained using an operation status of the electric turbocharger 2 and evaluation results accumulated in advance are used. Next, a predicted value of the remaining life is saved (P24).

Then, determination of the remaining life is performed (P25). In the determination of the remaining life, it is determined whether or not a maintenance request flag condition is satisfied. When it is determined that the maintenance request flag condition is satisfied, a maintenance request flag is set (P26).

Subsequently, details for evaluating the life will be described. It has already been mentioned that the remaining life is obtained using the history of the rotation speed. First, several parameters for evaluating the remaining life will be described. Next, a method for evaluating the remaining life using those parameters will be described. Then, a functional configuration of the controller 5 that executes the life evaluation method will be described.

Fig. 3(a) is an illustration of the rotation speed history data D1. Further, Fig. 3(b) is an illustration of a change over time in the remaining foil thickness. The rotation speed history data D1 is composed of time and rotation speed. When the operation of the electric turbocharger 2 in the stopped state is started, the rotation speed increases. The rotation speed increases or decreases in response to a request from the outside. In the example of a graph G31 in Fig. 3(a), after reaching a predetermined rotation speed, the predetermined rotation speed is maintained for a certain period of time. Thereafter, the rotation speed gradually decreases and reaches zero. The example of the graph G31 is an example where the electric turbocharger 2 operates at a high rotation speed. Since the maximum rotation speed is high, a required stop time D6 from the maximum rotation speed to zero tends to be short. The example of the graph G31 may include a state where the rotation speed fluctuates in a short time (load fluctuation state).

Here, an idle rotation speed R1 is presented. The idle rotation speed R1 may be defined as, for example, the rotation speed of the shaft 23 when the supply of the air A2 from the electric turbocharger 2 to the fuel cell stack 4 is in a minimum state. A specified upper limit rotation speed R2 (predetermined rotation state) is presented. The specified upper limit rotation speed R2 is equal to or lower than the idle rotation speed R1. The specified upper limit rotation speed R2 is greater than zero. In the following description, data included in a range of rotation speeds smaller than the specified upper limit rotation speed R2 is referred to as target rotation speed history data D2. The required stop time D6 is presented. The required stop time D6 is defined as a time from the specified upper limit rotation speed R2 until the rotation speed reaches zero.

A contact rotation speed D4 is presented. It has already been mentioned that the air bearings 22A and 22B are hydrodynamic bearings. The contact rotation speed D4 may be defined as a rotation speed at which a state switches from non-contact state to the contact state as the rotation speed of the shaft 23 gradually decreases while the shaft 23 is rotating in the non-contact state. The contact rotation speed D4 is smaller than the idle rotation speed R1. The contact rotation speed D4 may be smaller than the specified upper limit rotation speed R2. The contact rotation speed D4 is affected by the operation status of the electric turbocharger 2. It may be assumed that the contact rotation speed D4 changes within a predetermined range according to the operation status of the electric turbocharger 2.

It has already been mentioned that the foils 221 provided in the air bearings 22A and 22B are worn by the shaft 23 rotating while being in contact. In the graph G31 of Fig. 3(a), in a period where the rotation speed is higher than the contact rotation speed D4 (non-contact period T1a), since the shaft 23 is not in contact with the foils 221, it may be assumed that wear of the foils 221 does not occur. Therefore, in a graph G33 of Fig. 3(b), in a period T1b corresponding to the non-contact period T1a, since wear of the foils 221 does not occur, it may be assumed that the thickness of the foils 221 is constant.

In the graph G31 of Fig. 3(a), in a period where the rotation speed is lower than the contact rotation speed D4 (contact period T2a), since the shaft 23 is in contact with the foils 221, it may be assumed that wear of the foils 221 occurs. Therefore, in a graph G33a of Fig. 3(b), in a period T2b corresponding to the contact period T2a, it may be assumed that wear of the foils 221 occurs and the thickness of the foil 221 gradually decreases.

The example of a graph G32 in Fig. 3(a) is an example where the electric turbocharger 2 operates at a low rotation speed. The example of the graph G32 may include a steady operation state where the electric turbocharger 2 operates at a constant rotation speed. In the case of low rotation speed operation and low load operation, the required stop time D6 until the rotation speed reaches zero tends to be long.

LIFE EVALUATION METHOD

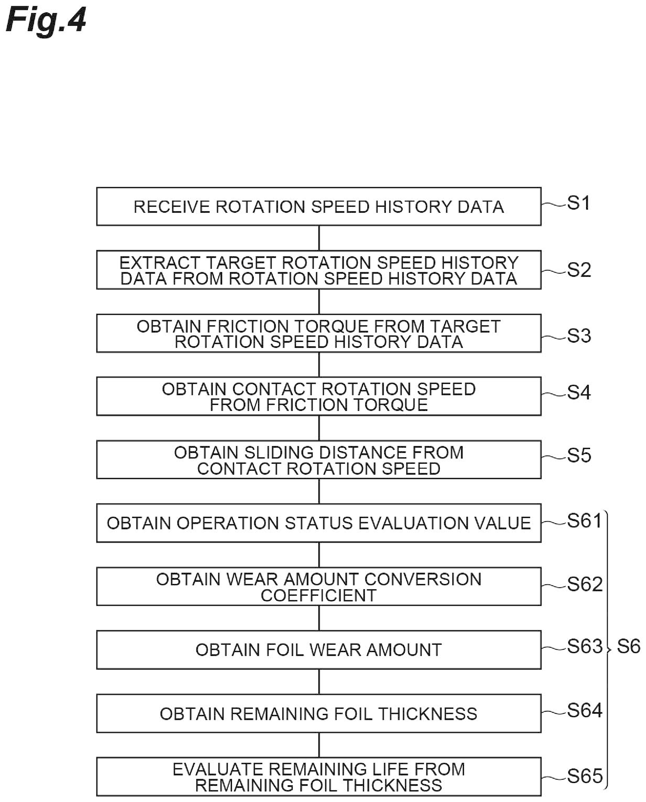

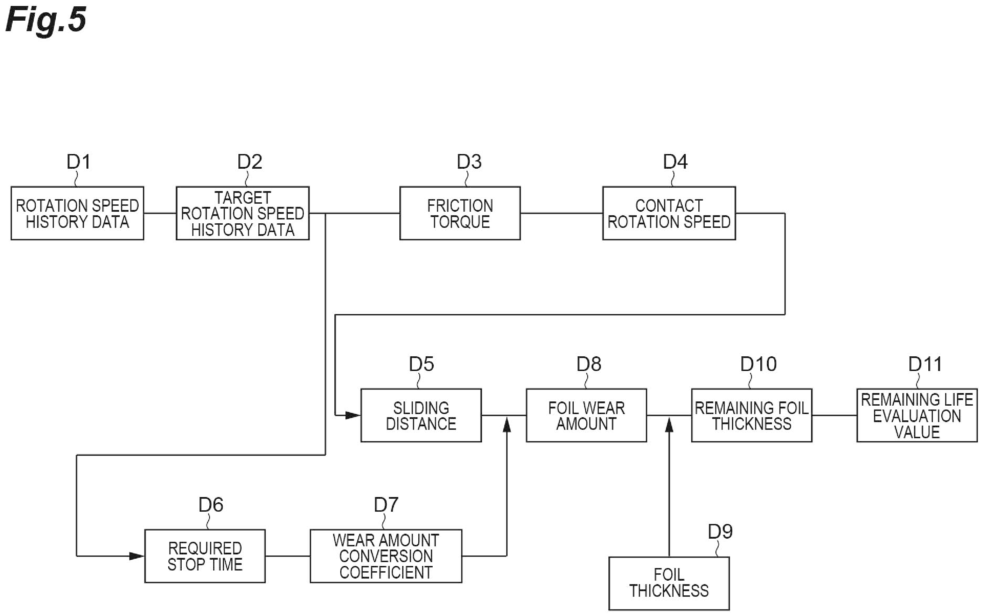

Fig. 4 is a flowchart of the life evaluation method. Fig. 5 is a conceptual diagram showing a flow of parameters until a remaining life evaluation value D11 is obtained from the rotation speed history data D1 in the life evaluation method.

First, the controller 5 receives the rotation speed history data D1 (S1). The controller 5 receives the rotation speed history data D1 from the current sensor M1, the motor sensor M2, the rotation speed sensor M3, and the like. Next, the controller 5 extracts the target rotation speed history data D2 from the rotation speed history data D1 (S2). The controller 5 extracts a range from the specified upper limit rotation speed R2 to zero rotation speed in the rotation speed history data D1 as the target rotation speed history data D2.

Next, the controller 5 obtains a friction torque D3 from the target rotation speed history data D2 (S3). Subsequently, the controller 5 obtains the contact rotation speed D4 from the friction torque D3 (S4). The air bearings 22A and 22B may take a state where the shaft 23 rotates in contact and a state where the shaft 23 rotates without contact. The friction torque D3 generated between the foil 221 and the shaft 23 when the shaft 23 is in the state of rotating in contact is different from the friction torque D3 generated between the foil 221 and the shaft 23 when the shaft 23 is in the state of rotating without contact. For example, when the rotation speed of the shaft 23 decreases and the state switches from the state of rotating without contact to the state where the shaft 23 rotates in contact, the friction torque D3 may change discontinuously. Thus, since there is a relationship between the rotation state of the shaft 23 and the friction torque D3, the contact rotation speed D4 can be obtained from the friction torque.

Next, a sliding distance D5 is obtained (S5). The sliding distance D5 is a distance over which the shaft 23 rotates while rubbing against the foil 221 during a period from the contact rotation speed D4 until the rotation speed becomes zero. The controller 5 obtains the sliding distance D5 using a time history of the rotation speed from the contact rotation speed D4 until the rotation speed becomes zero and physical dimension values such as a diameter of the shaft 23.

Incidentally, it has already been mentioned that the life evaluation method evaluates the life based on the thickness of the foil 221. The wear amount of the foil 221 generated by the rubbing between the shaft 23 and the foil 221 is defined as a function of the sliding distance D5. As the sliding distance D5 becomes longer, the wear amount of the foil 221 increases. If the wear amount of the foil 221 can be calculated, the thickness of the remaining foil 221 (remaining foil thickness D10) can be obtained. By using the remaining foil thickness D10, the life of the foil 221 can be evaluated.

In the life evaluation method of the present disclosure, an operation status of the electric turbocharger 2 is considered for a coefficient for converting the sliding distance D5 into the wear amount of the foil 221. The longer the sliding distance D5 is, the larger the wear amount of the foil 221 is, but the wear amount of the foil 221 per unit length of sliding distance D5 is affected by the operation status of the electric turbocharger 2. When the operation status during the period when the shaft 23 and the foil 221 are not in contact (see period T1a in Fig. 3(a)) is high load and/or high rotation speed, the wear amount of the foil 221 per unit length of sliding distance D5 tends to increase. For example, in Fig. 3(b), under an operation status of high rotation and high load, the speed of wear is high, and it can be represented that the slope becomes steep as shown in the graph G33a. Conversely, when the operation status up to that point is low load and/or constant load, the wear amount of the foil 221 per unit length of sliding distance D5 tends to decrease. For example, in Fig. 3(b), under an operation status of low rotation and low load, the speed of wear is slow, and it can be represented that the slope becomes gradual as shown in a graph G33b. The life evaluation method of the present disclosure not only simply converts the sliding distance D5 into the wear amount of the foil 221, but also reflects the influence of the operation status on the coefficient for converting the sliding distance D5 into the wear amount of the foil 221.

Next, the controller 5 obtains the remaining life evaluation value D11 using the sliding distance D5 (S6). Specifically, first, the controller 5 obtains an operation status evaluation value (S61). The operation status evaluation value is a value that determines whether the operation status up to that point can be defined as high load and/or high rotation speed, or can be defined as low load and/or constant load. In the present disclosure, for convenience of explanation, the operation status evaluation value defines two operation statuses. However, the operation status evaluation value may define the operation status in more detail. An example of the operation status evaluation value is the required stop time D6. This is because the shorter the required stop time D6 is, the higher the possibility that the operation status up to that point was high load and/or high rotation speed. Another example of the operation status evaluation value is the contact rotation speed D4. The operation status evaluation value may be defined only by the required stop time D6, or may be defined only by the contact rotation speed D4. The operation status evaluation value may be defined using both the required stop time D6 and the contact rotation speed D4.

For example, the required stop time D6 and/or the contact rotation speed D4 obtained every time the rotation speed becomes zero may be used as the operation status evaluation value. The operation status evaluation value may be obtained using a plurality of values obtained based on a plurality of required stop times D6 and/or contact rotation speeds D4 obtained in the past. For example, an average value of a plurality of required stop times D6 and/or contact rotation speeds D4 obtained in the past may be used as the operation status evaluation value. A standard deviation of a plurality of required stop times D6 and/or contact rotation speeds D4 may be used as the operation status evaluation value.

Next, the controller 5 obtains a wear amount conversion coefficient D7 (S62). The controller 5 may determine a coefficient for converting the sliding distance D5 into the wear amount of the foil 221 by setting a threshold value in advance and comparing the threshold value with the required stop time D6. This coefficient for converting the sliding distance D5 into the wear amount of the foil 221 is referred to as the wear amount conversion coefficient D7.

Next, the controller 5 obtains a foil wear amount D8 (S63). The controller 5 obtains the foil wear amount D8 by multiplying the sliding distance D5 by the wear amount conversion coefficient D7. Next, the controller 5 obtains the remaining foil thickness D10 (S64). The controller 5 reads a foil thickness D9 obtained in the previous process. Then, the controller 5 subtracts the foil wear amount D8 from the read foil thickness D9. As a result, the remaining foil thickness D10 is obtained.

Then, the controller 5 evaluates the remaining life evaluation value D11 (S65). The remaining life evaluation value D11 is a condition until reaching the thickness of the foil 221 for which the maintenance request flag should be set (see reference sign R3 in Fig. 3(b)). For example, the remaining life evaluation value D11 may be defined by the number of contacts until reaching the thickness of the foil 221 for which the maintenance request flag should be set. The remaining life evaluation value D11 may be defined by a time until reaching the thickness of the foil 221 for which the maintenance request flag should be set. The remaining life evaluation value D11 may be defined by a sliding distance (rotation speed) until reaching the thickness of the foil 221 for which the maintenance request flag should be set.

LIFE EVALUATION DEVICE

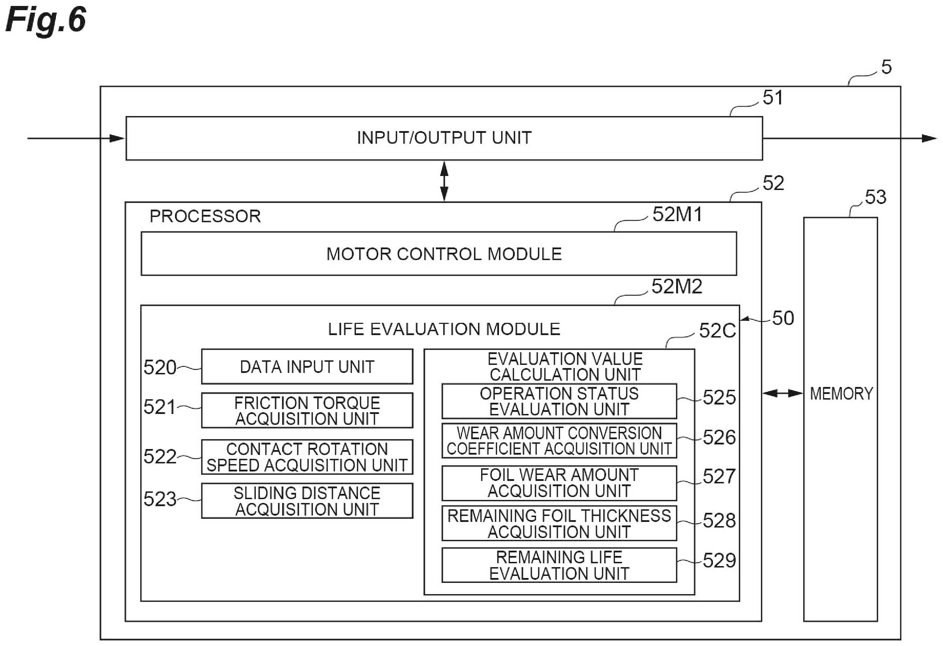

Next, functions of the controller 5 including functions of a life evaluation device 50 that executes the life evaluation method will be described. As shown in Fig. 6, the controller 5 is physically a computer including an input/output unit 51, a processor 52, a memory 53, and the like. By the processor 52 executing a life evaluation program PG2 recorded in the memory 53, functional elements constituting the life evaluation device 50 are realized.

The input/output unit 51 passes data received from the outside of the controller 5 to the processor 52 and receives a calculation result of the processor 52. The input/output unit 51 receives predetermined data from, for example, the host system controller 91 or the like, and outputs predetermined data to the host system controller 91 or the like. The input/output unit 51 outputs a control signal for controlling the switching elements to the power conversion circuit 261. The input/output unit 51 receives the rotation speed history data D1 from the current sensor M1 or the like. The input/output unit 51 passes the received data to the processor 52 and receives a calculation result of the processor 52.

The processor 52 is connected to the input/output unit 51. The processor 52 receives predetermined data from the input/output unit 51 and outputs a calculation result to the input/output unit 51. The processor 52 is connected to the memory 53. The processor 52 receives predetermined data and programs from the memory 53 and outputs a calculation result to the memory 53.

The memory 53 stores various programs required for the operation of the electric turbocharger 2, such as the life evaluation program PG2 and a rotation control program. The memory 53 temporarily or permanently stores various parameters used in the life evaluation method. The memory 53 is connected so as to be accessible from the processor 52.

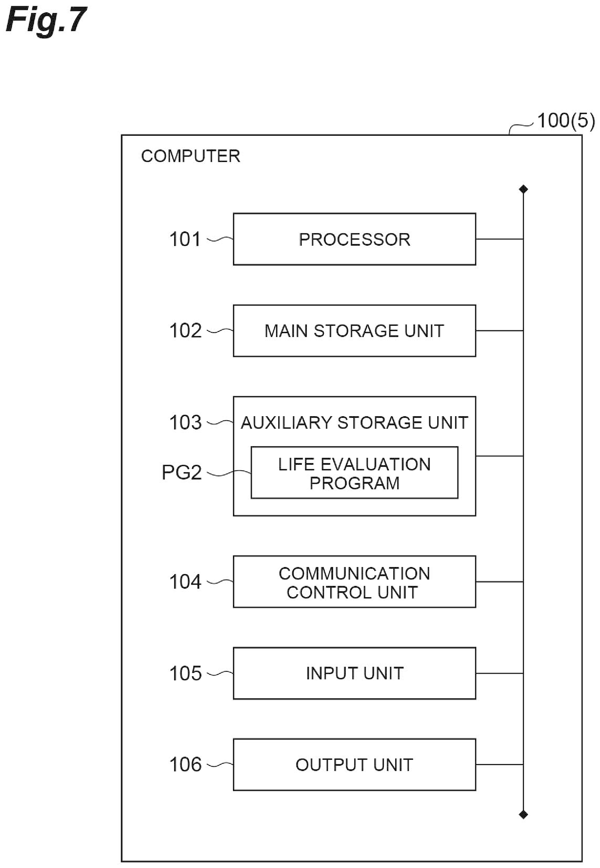

The physical configuration of the controller 5 is not limited to the configuration shown in Fig. 6. For example, the controller 5 can also adopt a configuration as shown in Fig. 7.

The controller 5 is configured by a computer 100. The computer 100 includes a processor 101 which is a CPU (Central Processing Unit), a main storage unit 102, an auxiliary storage unit 103, an external communication unit 104, an operation unit 105, and an output unit 106. The processor 101 in Fig. 7 corresponds to the processor 52 in Fig. 6. The main storage unit 102 and the auxiliary storage unit 103 in Fig. 7 correspond to the memory 53 in Fig. 6. The external communication unit 104, the operation unit 105, and the output unit 106 in Fig. 7 correspond to the input/output unit 51 in Fig. 6. The controller 5 is constituted by one computer 100 or a plurality of computers 100 configured with these pieces of hardware and software such as programs.

When the controller 5 is configured by the plurality of computers 100, the plurality of computers 100 may be connected locally, or may be connected via a communication network such as the Internet or an intranet. By this connection, one controller 5 is logically constructed.

The processor 101 executes an operating system, application programs, and the like. The main storage unit 102 is configured by a ROM (Read Only Memory) and a RAM (Random Access Memory). The auxiliary storage unit 103 is a storage medium configured by a hard disk, a flash memory, or the like. The auxiliary storage unit 103 generally stores a larger amount of data than the main storage unit 102.

The life evaluation program PG2 causes the computer 100 to function as each functional element of the controller 5. For example, the life evaluation program PG2 is read by the processor 101 or the main storage unit 102, and operates at least one of the processor 101, the main storage unit 102, the auxiliary storage unit 103, the external communication unit 104, the operation unit 105, and the output unit 106. For example, the life evaluation program PG2 performs reading and writing of data in the main storage unit 102 and the auxiliary storage unit 103.

The life evaluation program PG2 may be provided in a state of being recorded on a tangible recording medium such as a CD-ROM, a DVD-ROM, or a semiconductor memory, for example. The life evaluation program PG2 may be provided as a data signal via a communication network.

Various configurations may be adopted for the hardware configuration of the controller 5. For example, when realized as an embedded system, a hardware configuration including the main storage unit 102 and not including the auxiliary storage unit 103 may be adopted. According to this configuration, the life evaluation program PG2 is stored in the main storage unit 102. When a hardware configuration including the auxiliary storage unit 103 is adopted, various data used for life evaluation may be stored in the auxiliary storage unit 103. Data used for life evaluation tends to have a large data capacity. Since the auxiliary storage unit 103 has a larger storable data capacity than the main storage unit 102, it is possible to store more data used for life evaluation. The data used for life evaluation may be transmitted to and stored in an external server via the external communication unit 104. The data used for life evaluation may be transmitted to and stored in a cloud via the external communication unit 104.

Reference is made to Fig. 6 again. The controller 5 includes a motor control module 52M1 and a life evaluation module 52M2 as functional elements. The motor control module 52M1 outputs a control signal for the power conversion circuit 261. The life evaluation module 52M2 outputs the remaining life evaluation value D11.

The life evaluation module 52M2 (life evaluation unit) has a data input unit 520, a friction torque acquisition unit 521, a sliding distance acquisition unit 523, a contact rotation speed acquisition unit 522, and an evaluation value calculation unit 52C.

The data input unit 520 receives the rotation speed history data D1 from the input/output unit 51. The data input unit 520 executes the operation (S1) of receiving the rotation speed history data D1 in the life evaluation method.

The friction torque acquisition unit 521 receives the rotation speed history data D1 and outputs the friction torque D3. The friction torque acquisition unit 521 executes the operation (S3) of obtaining the friction torque D3 from the target rotation speed history data D2 in the life evaluation method.

The contact rotation speed acquisition unit 522 receives the friction torque D3 and outputs the contact rotation speed D4. The contact rotation speed acquisition unit 522 executes the operation (S4) of obtaining the contact rotation speed D4 from the friction torque D3 in the life evaluation method.

The sliding distance acquisition unit 523 receives the rotation speed history data D1, the contact rotation speed D4, the dimension values of the shaft 23, and the like, and outputs the sliding distance D5. The sliding distance acquisition unit 523 executes the operation (S5) of obtaining the sliding distance D5 in the life evaluation method.

The evaluation value calculation unit 52C receives the sliding distance D5 and the like, and outputs the remaining life evaluation value D11. The evaluation value calculation unit 52C executes the operation (S6) of evaluating the life in the life evaluation method. The evaluation value calculation unit 52C includes, as functional components for obtaining the remaining life evaluation value D11, an operation status evaluation unit 525, a wear amount conversion coefficient acquisition unit 526, a foil wear amount acquisition unit 527, a remaining foil thickness acquisition unit 528, and a remaining life evaluation unit 529.

The operation status evaluation unit 525 receives the rotation speed history data D1 and outputs the required stop time D6 as the operation status evaluation value. The operation status evaluation unit 525 executes the operation (S61) of obtaining the operation status evaluation value in the life evaluation method.

The wear amount conversion coefficient acquisition unit 526 receives the required stop time D6 as the operation status evaluation value and outputs the wear amount conversion coefficient D7. The wear amount conversion coefficient acquisition unit 526 executes the operation (S62) of obtaining the wear amount conversion coefficient D7 in the life evaluation method.

The foil wear amount acquisition unit 527 receives the sliding distance D5 and the wear amount conversion coefficient D7 and outputs the foil wear amount D8. The foil wear amount acquisition unit 527 executes the operation (S63) of obtaining the foil wear amount D8 in the life evaluation method.

The remaining foil thickness acquisition unit 528 receives the foil thickness D9 and the foil wear amount D8 and outputs the remaining foil thickness D10. The remaining foil thickness acquisition unit 528 executes the operation (S64) of obtaining the remaining foil thickness D10 in the life evaluation method.

The remaining life evaluation unit 529 receives the remaining foil thickness D10 and outputs the remaining life evaluation value D11. The remaining life evaluation unit 529 executes the operation (S65) of evaluating the remaining life evaluation value D11 in the life evaluation method.

EFFECTS

Incidentally, the energy balance for the motor 25 can be shown by, for example, the following equation (1).

$$\text{Compressor driving force} - \text{Turbine output} + \text{Shaft system mechanical loss} - \text{Motor output} = -\text{Rotating system moment of inertia} \times \text{Angular acceleration} \dots (1) \tag{1}$$

At the time of startup where the rotation speed is low or stop, the outputs of the compressor 21 and the turbine 24 as aerodynamic machines can be treated as sufficiently low. At the time of startup where the rotation speed is low, it can be defined as from zero rotation speed to the idle rotation speed. At the time of stop, it can be defined as from the idle rotation speed to zero rotation speed. The rotating system moment of inertia is a design value. The rotating system moment of inertia does not change according to the operation status. Therefore, the change in the rotation speed of the motor 25 (angular acceleration) indicates the shaft system mechanical loss and the motor output. When the shaft 23 is supported by the air bearings 22A and 22B, a change in that state appears in a low rotation speed range.

In equation (1), the term of the shaft system mechanical loss can be expressed as "shaft system mechanical loss = friction torque × angular velocity". The term of the shaft system mechanical loss includes a loss caused by friction with the shaft 23 generated in the air bearings 22A and 22B, and a loss caused by friction with air on the surface of the rotating part. In an operation state where the rotation speed is low, it is considered that the loss caused by friction with the shaft 23 generated in the air bearings 22A and 22B is dominant. In an operation state where the rotation speed is high, since an air film is formed between the foils 221 of the air bearings 22A and 22B and the shaft 23, the loss is small.

By observing the rotation speed and the rate of change of the rotation speed, it becomes possible to evaluate the state of friction in the air bearings 22A and 22B. In a state where the drive current to the motor 25 is stopped (when the motor 25 is stopped), since the motor 25 is not in a driving state, only the effect of the shaft system mechanical loss is observable. Therefore, in the present disclosure, the state of the air bearings 22A and 22B can be evaluated using the rotation speed history data D1.

The electric motor system 1 includes the motor 25, the hydrodynamic air bearings 22A and 22B that rotatably support the shaft 23 of the motor 25, the power conversion circuit 261 that provides the drive current C26 to the motor 25, and the controller 5 that controls the operation of the power conversion circuit 261. The controller 5 includes the data input unit 520 that obtains the rotation speed history data D1 which is a time history of the rotation speed of the motor 25, the sliding distance acquisition unit 523 that obtains, using the rotation speed history data D1, the sliding distance D5 when the shaft 23 is in the state of rotating while being in contact with the air bearings 22A and 22B, and the evaluation value calculation unit 52C that evaluates the life of the air bearings 22A and 22B using the sliding distance D5.

The controller 5 including the functions of the life evaluation device 50 includes the data input unit 520 that obtains the rotation speed history data D1 which is a time history of the rotation speed of the motor 25, the sliding distance acquisition unit 523 that obtains, using the rotation speed history data D1, the sliding distance D5 when the shaft 23 is in the state of rotating while being in contact with the air bearings 22A and 22B, and the evaluation value calculation unit 52C that evaluates the life of the air bearings 22A and 22B using the sliding distance D5.

The life evaluation method includes step S1 of obtaining the rotation speed history data D1 which is a time history of the rotation speed of the motor 25, step S5 of obtaining, using the rotation speed history data D1, the sliding distance D5 when the shaft 23 is in the state of rotating while being in contact with the air bearings 22A and 22B, and step S6 of evaluating the life of the air bearings 22A and 22B using the sliding distance D5.

The life evaluation program PG2 causes the computer 100 to operate as the data input unit 520 that obtains the rotation speed history data D1 which is a time history of the rotation speed of the motor 25, the sliding distance acquisition unit 523 that obtains, using the rotation speed history data D1, the sliding distance D5 when the shaft 23 is in the state of rotating while being in contact with the air bearings 22A and 22B, and the evaluation value calculation unit 52C that evaluates the life of the air bearings 22A and 22B using the sliding distance D5.

According to the electric motor system 1, the controller 5 including the functions of the life evaluation device 50, the life evaluation method, and the life evaluation program PG2, the sliding distance D5 when the shaft 23 is in the state of rotating while being in contact with the air bearings 22A and 22B is calculated. The controller 5 evaluates the life of the air bearings 22A and 22B using the sliding distance D5. Therefore, it is possible to evaluate the life of the system including the electric motor caused by the air bearings 22A and 22B.

The electric motor system 1, the controller 5 including the functions of the life evaluation device 50, the life evaluation method, and the life evaluation program PG2 obtain the contact rotation speed D4, the friction torque D3, the sliding distance D5, and the required stop time D6 by measurement or calculation. By using the average and/or standard deviation of these parameters, it is possible to estimate the operation status the electric turbocharger 2. By using the estimated operation status and data obtained in advance by evaluation tests or the like, it becomes possible to estimate how much the foils 211 have worn. As a result, since the remaining life evaluation value D11 can be obtained, it becomes possible to obtain the timing of maintenance.

The air bearings 22A and 22B may have the foils 221 with a thin-plate shape surrounding the shaft 23, and rotatably support the shaft 23 by a gas film formed between the shaft 23 in rotation and the foils 221. The evaluation value calculation unit 52C may include the remaining foil thickness acquisition unit 528 that obtains the remaining foil thickness D10 based on the foil wear amount D8 caused by rotation of the shaft 23 while being in contact with the air bearings 22A and 22B as the rotation speed of the shaft 23 decreases. According to this configuration, it is possible to perform processing for evaluating the life using the thickness of the foils 221.

The evaluation value calculation unit 52C includes the wear amount conversion coefficient acquisition unit 526 that obtains the wear amount conversion coefficient D7 for converting the sliding distance D5 into the foil wear amount D8 when the foil wear amount D8 is defined as a function having the sliding distance D5 as a variable. According to this configuration, the foil wear amount D8 can be obtained from the sliding distance D5.

The wear amount conversion coefficient acquisition unit 526 obtains the wear amount conversion coefficient D7 based on at least one of the required stop time D6 required until the rotation of the shaft 23 stops after transitioning from the state where the drive current C26 is provided from the power conversion circuit 261 to the motor 25 to the state where the drive current C26 is stopped, and the contact rotation speed D4 which is a rotation speed at which the shaft 23 whose rotation speed decreases starts to contact the foils 221 in the state where the drive current C26 is stopped. According to this configuration, it is possible to reflect the operation status in the calculation of the foil wear amount D8.

The controller 5 further includes the friction torque acquisition unit 521 that obtains data regarding the friction torque between the air bearings 22A and 22B and the shaft 23 in a range of a specified rotation speed using the rotation speed history data D1, and the contact rotation speed acquisition unit 522 that obtains the contact rotation speed D4 using the friction torque D3 and the rotation speed history data D1. According to this configuration, it is possible to easily obtain the contact rotation speed D4 for obtaining the sliding distance D5.

MODIFICATIONS

Examples of the electric motor system, the life evaluation device, the life evaluation method, and the life evaluation program have been described. The electric motor system, the life evaluation device, the life evaluation method, and the life evaluation program may be implemented in various forms without being limited to the above examples.

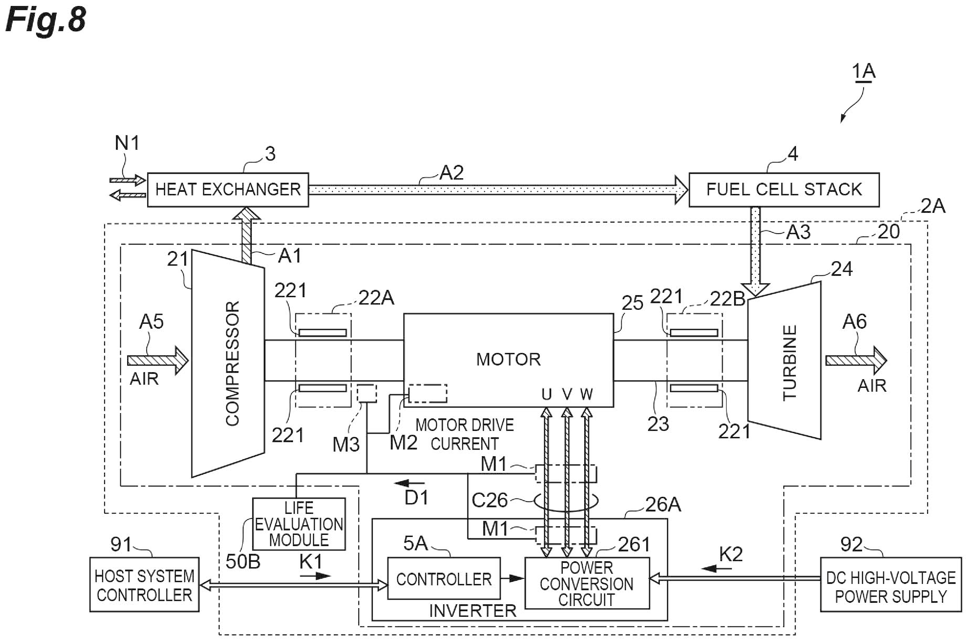

For example, like an electric turbocharger 2A of an electric motor system 1A shown in Fig. 8, the function of evaluating the life may be realized by a life evaluation device 50B separate from a controller 5A of an inverter 26A. In the electric motor system 1A in which the function of evaluating the life is realized by a component separate from the inverter 26A, a system including the inverter 26 configured by the controller 5A not having the function of evaluating the life is referred to as a motor system 20.

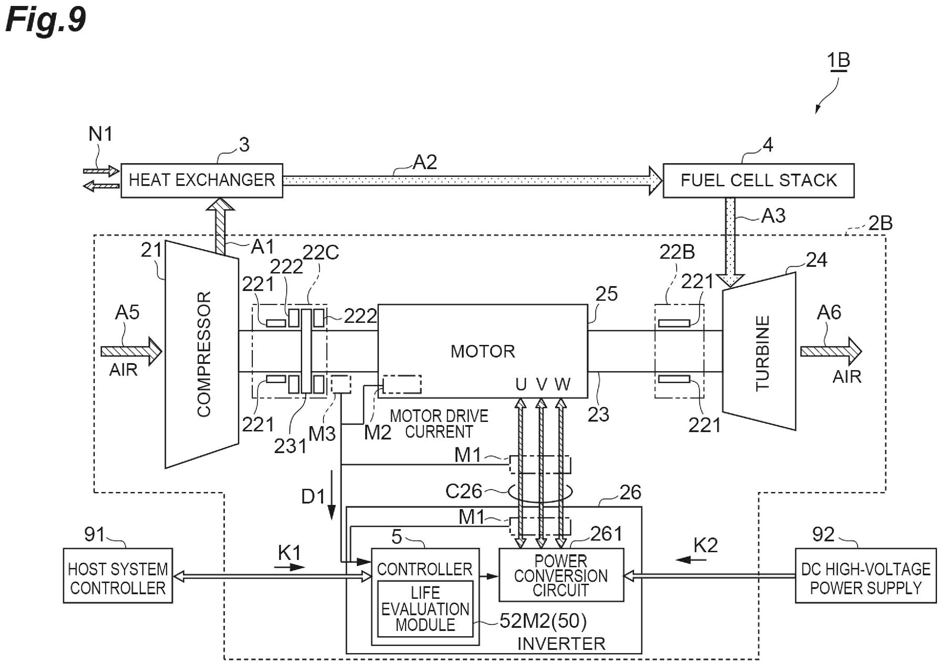

For example, an electric turbocharger 2B constituting an electric motor system 1B shown in Fig. 9 may include an air bearing 22C instead of the air bearing 22A. The air bearing 22C has a function of supporting a radial load and a function of receiving a thrust load. As shown in Fig. 9, the air bearing 22C has a pair of foils 222 in addition to the foil 221 receiving the radial load. The pair of foils 222 are arranged so as to interpose a thrust collar 231 provided on the shaft 23 therebetween, and receive the thrust load by gas films generated between the thrust collar 231 and each of the pair of foils 222. Even with such the air bearing 22C, the life can be evaluated using the contact rotation speed D4, the friction torque D3, the sliding distance D5, and the required stop time D6 described above.

**Reference Signs List**

1 ... Electric motor system
2, 2A, 2B ... Electric turbocharger
20 ... Motor system
22A, 22B, 22C ... Air bearing
221, 222 ... Foil
23 ... Shaft
231 ... Thrust collar
25 ... Motor
261 ... Power conversion circuit (Power conversion unit)
100 ... Computer
221 ... Foil
5 ... Controller
50B ... Life evaluation device
52C ... Evaluation value calculation unit
520 ... Data input unit
521 ... Friction torque acquisition unit
522 ... Contact rotation speed acquisition unit
523 ... Sliding distance acquisition unit
526 ... Wear amount conversion coefficient acquisition unit
528 ... Remaining foil thickness acquisition unit
52M1 ... Motor control module
52M2 ... Life evaluation module (Life evaluation unit)
C26 ... Drive current
D1 ... Rotation speed history data
D4 ... Contact rotation speed
D5 ... Sliding distance
D6 ... Required stop time
D7 ... Wear amount conversion coefficient
D8 ... Foil wear amount
PG2 ... Life evaluation program

**Claims**

1. An electric motor system comprising:

   a motor;
   a hydrodynamic air bearing that rotatably supports a shaft of the motor, the shaft being configured to rotate;
   a power conversion unit that provides a drive current to the motor; and
   a life evaluation unit that evaluates a life of the air bearing,

wherein the life evaluation unit includes:

a data input unit that obtains rotation speed history data which is a time history of a rotation speed of the motor;
a sliding distance acquisition unit that obtains, using the rotation speed history data, a sliding distance when the shaft is in a state of rotating while being in contact with the air bearing; and
an evaluation value calculation unit that obtains a remaining life evaluation value for evaluating the life of the air bearing using the sliding distance.

2. The electric motor system according to claim 1,

wherein the air bearing has a foil with a thin-plate shape and rotatably supports the shaft along a radial direction of the shaft by a gas film formed between the shaft in rotation and the foil, and
wherein the evaluation value calculation unit includes a remaining foil thickness acquisition unit that obtains a remaining foil thickness of the foil after wearing based on a wear amount of the foil caused by rotation of the shaft while being in contact with the air bearing as the rotation speed of the shaft decreases.

3. The electric motor system according to claim 1,

wherein the air bearing has a foil with a thin-plate shape and rotatably supports the shaft along an axial direction of the shaft by a gas film formed between a thrust collar provided on the shaft in rotation and the foil, and
wherein the evaluation value calculation unit includes a remaining foil thickness acquisition unit that obtains a remaining foil thickness of the foil after wearing based on a foil wear amount of the foil caused by rotation of the shaft while being in contact with the air bearing as the rotation speed of the shaft decreases.

4. The electric motor system according to claim 2 or 3, wherein the evaluation value calculation unit includes a wear amount conversion coefficient acquisition unit that obtains a wear amount conversion coefficient for converting the sliding distance into the wear amount of the foil when the wear amount of the foil is defined as a function having the sliding distance as a variable.

5. The electric motor system according to claim 4, wherein the wear amount conversion coefficient acquisition unit obtains the wear amount conversion coefficient based on at least one of a required stop time required to reach a state where rotation of the shaft is stopped from a predetermined rotation state after transitioning from a state where the drive current is provided from the power conversion unit to the motor to a state where the drive current is stopped, and a contact rotation speed which is a rotation speed at which the shaft whose rotation speed decreases starts to contact the foil in the state where the drive current is stopped.

6. The electric motor system according to claim 5, wherein the life evaluation unit further includes:

a friction torque acquisition unit that obtains a friction torque between the air bearing and the shaft using the rotation speed history data; and
a contact rotation speed acquisition unit that obtains the contact rotation speed using the friction torque.

7. A life evaluation device for evaluating a life of a motor system, the motor system including: a motor; a hydrodynamic air bearing that rotatably supports a shaft of the motor; and a power conversion unit that provides a drive current to the motor, the life evaluation device comprising:

a data input unit that obtains rotation speed history data which is a time history of a rotation speed of the motor;
a sliding distance acquisition unit that obtains, using the rotation speed history data, a sliding distance when the shaft is in a state of rotating while being in contact with the air bearing; and
an evaluation value calculation unit that obtains a remaining life evaluation value for evaluating the life of the air bearing using the sliding distance.

8. A life evaluation method for evaluating a life of a motor system, the motor system including: a motor; a hydrodynamic air bearing that rotatably supports a shaft of the motor; and a power conversion unit that provides a drive current to the motor, the method comprising:

a step of obtaining rotation speed history data which is a time history of a rotation speed of the motor;
a step of obtaining, using the rotation speed history data, a sliding distance when the shaft is in a state of rotating while being in contact with the air bearing; and
a step of obtaining a remaining life evaluation value for evaluating the life of the air bearing using the sliding distance.

9. A life evaluation program for evaluating a life of a motor system, the motor system including: a motor, a hydrodynamic air bearing that rotatably supports a shaft of the motor, and a power conversion unit that provides a drive current to the motor, the life evaluation program causing a computer to operate as:

a data input unit that obtains rotation speed history data which is a time history of a rotation speed of the motor;
a sliding distance acquisition unit that obtains, using the rotation speed history data, a sliding distance when the shaft is in a state of rotating while being in contact with the air bearing; and
an evaluation value calculation unit that obtains a remaining life evaluation value for evaluating the life of the air bearing using the sliding distance.

**Fig.1**

EP 4 768 701 A1

**Fig.2**

EP 4 768 701 A1

Fig.3

## Fig.4

RECEIVE ROTATION SPEED HISTORY DATA — S1

EXTRACT TARGET ROTATION SPEED HISTORY DATA FROM ROTATION SPEED HISTORY DATA — S2

OBTAIN FRICTION TORQUE FROM TARGET ROTATION SPEED HISTORY DATA — S3

OBTAIN CONTACT ROTATION SPEED FROM FRICTION TORQUE — S4

OBTAIN SLIDING DISTANCE FROM CONTACT ROTATION SPEED — S5

OBTAIN OPERATION STATUS EVALUATION VALUE — S61

OBTAIN WEAR AMOUNT CONVERSION COEFFICIENT — S62

OBTAIN FOIL WEAR AMOUNT — S63

OBTAIN REMAINING FOIL THICKNESS — S64

EVALUATE REMAINING LIFE FROM REMAINING FOIL THICKNESS — S65

S6

**Fig.5**

D1 ROTATION SPEED HISTORY DATA

D2 TARGET ROTATION SPEED HISTORY DATA

D3 FRICTION TORQUE

D4 CONTACT ROTATION SPEED

D5 SLIDING DISTANCE

D8 FOIL WEAR AMOUNT

D10 REMAINING FOIL THICKNESS

D11 REMAINING LIFE EVALUATION VALUE

D6 REQUIRED STOP TIME

D7 WEAR AMOUNT CONVERSION COEFFICIENT

D9 FOIL THICKNESS

EP 4 768 701 A1

18

**Fig.6**

# Fig.7

COMPUTER                                    100(5)

101 — PROCESSOR

102 — MAIN STORAGE UNIT

103 — AUXILIARY STORAGE UNIT

PG2 — LIFE EVALUATION PROGRAM

104 — COMMUNICATION CONTROL UNIT

105 — INPUT UNIT

106 — OUTPUT UNIT

**Fig.8**

EP 4 768 701 A1

**Fig.9**

EP 4 768 701 A1

**EP 4 768 701 A1**

# INTERNATIONAL SEARCH REPORT

| | International application No. |
|---|---|
| | **PCT/JP2024/037063** |

| A. | CLASSIFICATION OF SUBJECT MATTER |
|---|---|

*F02B 37/10*(2006.01)i; *F02B 39/10*(2006.01)i; *F02B 39/14*(2006.01)i; *H01M 8/04*(2016.01)i; *H01M 8/04111*(2016.01)i; *H01M 8/04313*(2016.01)i; *H02P 29/024*(2016.01)i
FI:   F02B37/10 Z; H02P29/024; F02B39/10; F02B39/14 A; H01M8/04 N; H01M8/04313; H01M8/04111

According to International Patent Classification (IPC) or to both national classification and IPC

| B. | FIELDS SEARCHED |
|---|---|

Minimum documentation searched (classification system followed by classification symbols)
F02B37/10; F02B39/10; F02B39/14; H01M8/04; H01M8/04111; H01M8/04313; H02P29/024

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-12995 A (HINO MOTORS, LTD.) 19 January 2012 (2012-01-19) | 1-9 |
| A | JP 2013-72301 A (MITSUBISHI ELECTRIC CORPORATION) 22 April 2013 (2013-04-22) | 1-9 |
| A | Microfilm of the specification and drawings annexed to the request of Japanese Utility Model Application No. 32820/1988 (Laid-open No. 136633/1989) (DAIHATSU DIESEL MFG) 19 September 1989 (1989-09-19) | 1-9 |
| A | CN 115199543 A (ROBERT BOSCH GMBH) 18 October 2022 (2022-10-18) | 1-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2024** | **03 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

23

**INTERNATIONAL SEARCH REPORT**
Information on patent family members

International application No.

**PCT/JP2024/037063**

| Patent document cited in search report | | | Publication date (day/month/year) | Patent family member(s) | Publication date (day/month/year) |
|---|---|---|---|---|---|
| JP | 2012-12995 | A | 19 January 2012 | (Family: none) | |
| JP | 2013-72301 | A | 22 April 2013 | (Family: none) | |
| JP | 1-136633 | U1 | 19 September 1989 | (Family: none) | |
| CN | 115199543 | A | 18 October 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012012995 A

- JP 2013072301 A